(19) 

**Europäisches Patentamt**
**European Patent Office**
**Office européen des brevets**

(11) **EP 4 572 212 A1**

(12) **EUROPEAN PATENT APPLICATION**
published in accordance with Art. 153(4) EPC

(43) Date of publication:
**18.06.2025 Bulletin 2025/25**

(21) Application number: **23853029.9**

(22) Date of filing: **10.08.2023**

(51) International Patent Classification (IPC):
*H04L 5/00* (2006.01)      *H04B 7/0413* (2017.01)

(52) Cooperative Patent Classification (CPC):
**H04B 7/0413; H04L 5/00**

(86) International application number:
**PCT/KR2023/011841**

(87) International publication number:
**WO 2024/035162 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100948**

(71) Applicant: **LG Electronics Inc.**
**Yeongdeungpo-gu**
**Seoul 07336 (KR)**

(72) Inventors:
• **JEONG, Chanho**
  **Seoul 06772 (KR)**
• **KIM, Hyungtae**
  **Seoul 06772 (KR)**
• **KANG, Jiwon**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR PTRS TRANSMISSION AND RECEPTION IN WIRELESS COMMUNICATION SYSTEM**

(57) A method performed by a user equipment according to an embodiment of the present disclosure comprises the steps of: receiving DCI for scheduling a PUSCH; transmitting a DMRS on the basis of one or more DMRS ports; transmitting a PTRS on the basis of at least one PTRS port; and transmitting the PUSCH. The number of layers related to the PUSCH is greater than 4. The DCI includes a PTRS-DMRS association field. The PTRS-DMRS association field indicates the association between the one or more DMRS ports and the at least one PTRS port. On the basis that the maximum number of the at least one PTRS port is 1, the PTRS-DMRS association field is based on a 3-bit value indicating one of 8 DMRS ports.

【FIG. 4】

```
        ┌─────────┐
        │  Start  │
        └────┬────┘
             │
   ┌─────────────────┐
   │   Receive DCI   │──── S410
   └────────┬────────┘
             │
   ┌─────────────────┐
   │  Transmit DMRS  │──── S420
   └────────┬────────┘
             │
   ┌─────────────────┐
   │  Transmit PTRS  │──── S430
   └────────┬────────┘
             │
   ┌─────────────────┐
   │  Transmit PUSCH │──── S440
   └────────┬────────┘
             │
        ┌─────────┐
        │   End   │
        └─────────┘
```

**Description**

[TECHNICAL FIELD]

The present disclosure relates to a method and a device for PTRS transmission and reception in a wireless communication system.

[BACKGROUND]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

In Rel-18, UL transmission of Rank 5 (i.e., the number of layers is 5) or higher based on 8 Tx antenna ports can be supported. In this case, problems may arise in the instructions of the PTRS-DMRS association. This is because the existing DCI field (i.e., PTRS-DMRS association field) utilizes a table defined on the assumption that up to four layers are supported.

[DISCLOSURE]

[TECHNICAL PROBLEM]

As described above, PTRS-DMRS association cannot be indicated when the number of layers is 5 or more (Rank 5) using the existing method.

An object of the present disclosure is to propose a method for indicating a PTRS-DMRS association for Rank 5 or higher

The technical objects to be achieved by the present disclosure are not limited to those that have been described hereinabove merely by way of example, and other technical objects that are not mentioned can be clearly understood from the following descriptions by those skilled in the art, to which the present disclosure pertains.

[TECHNICAL SOLUTION]

A method performed by a user equipment in a wireless communication system according to an embodiment of the present disclosure comprises receiving downlink control information (DCI) for scheduling a physical uplink shared channel (PUSCH), transmitting a DMRS based on the one or more DMRS ports, transmitting a phase tracking reference signal (PTRS) based on at least one PTRS port, and transmitting the PUSCH.

The DCI includes an antenna port field. One or more demodulation reference signal (DMRS) ports are indicated based on the antenna port field.

A transmission scheme related to the PUSCH is configured as a codebook or a non-codebook.

A number of layers related to the PUSCH is larger than 4. The DCI includes a PTRS-DMRS association field. The PTRS-DMRS association field indicates an association between the one or more DMRS ports and the least one PTRS port.

Based on a maximum number of the at least one PTRS ports being 1, the PTRS-DMRS association field is based on a 3 bit value indicating one of eight DMRS ports.

Based on the maximum number of the at least one PTRS ports being 2, the PTRS-DMRS association field may be based on a 4 bit value.

A 2 bit value of the 4 bit value may indicate one of four DMRS ports sharing a first PTRS port. A remaining 2 bit value of the 4 bit value may indicate one of four DMRS ports sharing a second PTRS port.

Based on the transmission scheme related to the PUSCH being configured as the codebook: the first PTRS port may be related to at least one first layer of the layers related to the PUSCH, and the second PTRS port may be related to at least one second layer of the layers related to the PUSCH.

The at least one first layer may be related to PUSCH antenna ports 1000, 1002, 1004, and 1006. The at least one second layer may be related to PUSCH antenna ports 1001, 1003, 1005, and 1007.

Based on the maximum number of the at least one PTRS ports being 4, the PTRS-DMRS association field may be based on the 4 bit value.

Each bit value of the 4 bit value may indicate one of two DMRS ports sharing each PTRS port among four PTRS ports.

A first bit value of the 4 bit value may indicate one of two DMRS ports sharing a first PTRS port. A second bit value of the 4 bit value may indicate one of two DMRS ports sharing a second PTRS port. A third bit value of the 4 bit value may indicate one of two DMRS ports sharing a third PTRS port. A fourth bit value of the 4 bit value may indicate one of four DMRS ports sharing a fourth PTRS port.

Based on the transmission scheme related to the PUSCH being configured as the codebook: the first PTRS port may be related to at least one first layer of the layers related to the PUSCH, the second PTRS port may be related to at least one second layer of the layers related to the PUSCH, the third PTRS port may be related to at least one third layer of the layers related to the PUSCH, and the fourth PTRS port may be related to at least one fourth layer of the layers related to the PUSCH.

The at least one first layer may be related to PUSCH antenna ports 1000 and 1004. The at least one second layer may be related to PUSCH antenna ports 1001 and 1005. The at least one third layer may be related to PUSCH antenna ports 1002 and 1006. The at least one fourth layer may be related to PUSCH antenna ports 1003 and 1007.

The one or more DMRS ports may be indicated based on the eight DMRS ports.

A user equipment operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include receiving downlink control information (DCI) for scheduling a physical uplink shared channel (PUSCH), transmitting a DMRS based on the one or more DMRS ports, transmitting a phase tracking reference signal (PTRS) based on at least one PTRS port, and transmitting the PUSCH.

The DCI includes an antenna port field. One or more demodulation reference signal (DMRS) ports are indicated based on the antenna port field.

A transmission scheme related to the PUSCH is configured as a codebook or a non-codebook.

A number of layers related to the PUSCH is larger than 4. The DCI includes a PTRS-DMRS association field. The PTRS-DMRS association field indicates an association between the one or more DMRS ports and the least one PTRS port.

Based on a maximum number of the at least one PTRS ports being 1, the PTRS-DMRS association field is based on a 3 bit value indicating one of eight DMRS ports.

A device according to another embodiment of the present disclosure comprises one or more memories and one or more processors functionally connected to the one or more memories.

The one or more memories include instructions of configuring the one or more processors to perform operations based on being executed by the one or more processors.

The operations include receiving downlink control information (DCI) for scheduling a physical uplink shared channel (PUSCH), transmitting a DMRS based on the one or more DMRS ports, transmitting a phase tracking reference signal (PTRS) based on at least one PTRS port, and transmitting the PUSCH.

The DCI includes an antenna port field. One or more demodulation reference signal (DMRS) ports are indicated based on the antenna port field.

A transmission scheme related to the PUSCH is configured as a codebook or a non-codebook.

A number of layers related to the PUSCH is larger than 4. The DCI includes a PTRS-DMRS association field. The PTRS-DMRS association field indicates an association between the one or more DMRS ports and the least one PTRS port.

Based on a maximum number of the at least one PTRS ports being 1, the PTRS-DMRS association field is based on a 3 bit value indicating one of eight DMRS ports.

One or more non-transitory computer-readable media according to another embodiment of the present disclosure store one or more instructions.

The one or more instructions executable by one or more processors are configured to allow the one or more processors to perform operations.

The operations include receiving downlink control information (DCI) for scheduling a physical uplink shared channel (PUSCH), transmitting a DMRS based on the one or more DMRS ports, transmitting a phase tracking reference signal (PTRS) based on at least one PTRS port, and transmitting the PUSCH.

The DCI includes an antenna port field. One or more demodulation reference signal (DMRS) ports are indicated based on the antenna port field.

A transmission scheme related to the PUSCH is configured as a codebook or a non-codebook.

A number of layers related to the PUSCH is larger than 4. The DCI includes a PTRS-DMRS association field. The PTRS-DMRS association field indicates an association between the one or more DMRS ports and the least one PTRS port.

Based on a maximum number of the at least one PTRS ports being 1, the PTRS-DMRS association field is based on a 3 bit value indicating one of eight DMRS ports.

A method performed by a base station in a wireless communication system according to another embodiment of the present disclosure comprises transmitting downlink control information (DCI) for scheduling a physical uplink shared channel (PUSCH), receiving a DMRS based on the one or more DMRS ports, receiving a phase tracking reference signal (PTRS) based on at least one PTRS port, and receiving the PUSCH.

The DCI includes an antenna port field. One or more demodulation reference signal (DMRS) ports are indicated based on the antenna port field.

A transmission scheme related to the PUSCH is configured as a codebook or a non-codebook.

A number of layers related to the PUSCH is larger than 4. The DCI includes a PTRS-DMRS association field. The PTRS-DMRS association field indicates an association between the one or more DMRS ports and the least one PTRS port.

Based on a maximum number of the at least one PTRS ports being 1, the PTRS-DMRS association field is based on a 3 bit value indicating one of eight DMRS ports.

A base station operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include transmitting downlink control information (DCI) for scheduling a physical uplink shared channel (PUSCH), receiving a DMRS based on the one or more DMRS ports, receiving a phase tracking reference signal (PTRS) based on at least one PTRS port, and receiving the PUSCH.

The DCI includes an antenna port field. One or more demodulation reference signal (DMRS) ports are indicated based on the antenna port field.

A transmission scheme related to the PUSCH is configured as a codebook or a non-codebook.

A number of layers related to the PUSCH is larger than 4. The DCI includes a PTRS-DMRS association field. The PTRS-DMRS association field indicates an association between the one or more DMRS ports and the least one PTRS port.

Based on a maximum number of the at least one PTRS ports being 1, the PTRS-DMRS association field is based on a 3 bit value indicating one of eight DMRS ports.

[ADVANTAGEOUS EFFECTS]

According to the existing method, the PTRS-DMRS association cannot be indicated or indicated incorrectly for Rank 5 or higher. Due to this, phase noise may not be properly compensated, which may result in reduced reliability.

According to one embodiment of the present disclosure, when the number of layers related to a PUSCH is greater than 4, the PTRS-DMRS association field of the DCI scheduling the corresponding PUSCH can be based on a bit value defined/set for each maximum number of PTRS ports. Based on the maximum number of PTRS ports being 1, the PTRS-DMRS association field can be based on a 3-bit value indicating one of the 8 DMRS ports. Based on the maximum number of PTRS ports being 2 or 4, the PTRS-DMRS association field can be based on a 4-bit value to indicate one of the DMRS ports sharing each PTRS port.

Therefore, the PTRS-DMRS association can also be indicated when the number of layers is 5 or more (Rank 5 or higher).

In addition, since phase noise can be appropriately compensated for above a specific rank through the instruction of the PTRS-DMRS association, a problem of reliability degradation described above can be prevented.

In addition, the PTRS-DMRS association can be indicated for each maximum number of PTRS ports, which can improve flexibility related to PTRS port/configuration indication.

Effects which may be obtained from the present disclosure are not limited by the above effects, and other effects that have not been mentioned may be clearly understood from the following description by those skilled in the art to which the present disclosure pertains.

[BRIEF DESCRIPTION OF THE DRAWINGS]

FIG. 1 is a flowchart illustrating one example of a DL DMRS procedure.
FIG. 2 is a flowchart illustrating one example of a DL PTRS procedure.

# EP 4 572 212 A1

FIG. 3 is a diagram illustrating one example of an uplink transmission/reception operation.

FIG. 4 is a flowchart for describing a method performed by a user equipment according to an embodiment of the present disclosure.

FIG. 5 is a flowchart for describing a method performed by a base station according to another embodiment of the present disclosure.

FIG. 6 is a diagram illustrating configurations of a first device and a second device according to an embodiment of the present disclosure.

[DETAILED DESCRIPTION]

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

**DMRS (demodulation reference signal)**

DMRS reception procedure

A DMRS-related operation for PDSCH reception will be described.

When receiving PDSCH scheduled by DCI format 1_0 or receiving PDSCH before dedicated higher layer configuration of any of the parameters dmrs-AdditionalPosition, maxLength, and dmrs-Type, the UE assumes that the PDSCH is not present in any symbol carrying DM-RS except for PDSCH with allocation duration of 2 symbols with PDSCH mapping type B, and a single symbol front-loaded DM-RS of configuration type 1 on DM-RS port 1000 is transmitted, and that all the remaining orthogonal antenna ports are not associated with transmission of PDSCH to another UE.

In addition, for PDSCH with mapping type A, the UE assumes that dmrs-AdditionalPosition='pos2' and up to two additional single-symbol DM-RS are present in a slot according to the PDSCH duration indicated in the DCI. For PDSCH with allocation duration of 7 symbols for normal CP or 6 symbols for extended CP with mapping type B, the UE assumes that one additional single-symbol DM-RS is present in the 5th or 6th symbol when the front-loaded DM-RS symbol is in the 1st or 2nd symbol respectively of the PDSCH allocation duration. Otherwise, the UE assumes that the additional DM-RS symbol is not present. And, for PDSCH with allocation duration of 4 symbols with mapping type B, the UE assumes that no additional DM-RS are present. For PDSCH with allocation duration of 2 symbols with mapping type B, the UE assumes that no additional DM-RS are present, and the UE assumes that the PDSCH is present in the symbol carrying DM-RS.

When receiving the PDSCH scheduled by DCI format 1_1 by a PDCCH having CRC scrambled by C-RNTI, MCS-C-RNTI, or configured scheduling (CS)-RNTI,

-    The UE may be configured as a higher layer parameter drms_Type and the configured DMRS configuration type is used for receiving the PDSCH.

-    The UE may be configured as a maximum number of front-loaded DMRS symbols for the PDSCH by the higher layer parameter maxLength given by DMRS-DownlinkConfig.

In the UE, the number of DMRS ports may be scheduled by an antenna port index of DCI format 1_1.

5

The DMRS configuration type is configured by the dmrs-Type parameter in DMRS-DownlinkConfig IE of Table 1. DMRS configuration type 1 has a higher RS density in a frequency domain and supports up to 4(8) ports for single (double)-symbol DMRS. In addition, DMRS configuration type 1 supports length-2 F-CDM and FDM for the single-symbol DMRS and supports length-2 F/T-CDM and FDM for the double-symbol DMRS. DMRS configuration type 2 has more DMRS antenna ports and supports up to 6(12) ports for the single (double)-symbol DMRS.

Table 1 below is a table showing one example of DMRS-DownlinkConfig IE used for configuring downlink DMRS for the PDSCH.

[Table 1]

```
-- ASN1START
-- TAG-DMRS-DOWNLINKCONFIG-START

DMRS-DownlinkConfig ::=          SEQUENCE {
    dmrs-Type                                       ENUMERATED   {type2}
OPTIONAL,    -- Need S
    dmrs-AdditionalPosition                 ENUMERATED   {pos0,  pos1,  pos3}
OPTIONAL,    -- Need S
    maxLength                                       ENUMERATED   {len2}
OPTIONAL,    -- Need S
    scramblingID0                                   INTEGER   (0..65535)
OPTIONAL,    -- Need S
    scramblingID1                                   INTEGER   (0..65535)
OPTIONAL,    -- Need S
    phaseTrackingRS                     SetupRelease  {  PTRS-DownlinkConfig    }
OPTIONAL,    -- Need M
    ...
}
```

```
-- TAG-DMRS-DOWNLINKCONFIG-STOP
-- ASN1STOP
```

In Table 1, parameter dmrs-AdditionalPosition represents a location for additional DM-RS in DL and when there is no corresponding parameter, the UE applies a pos2 value. Parameter Dmrs-Type represents selection of the DMRS type to be used for DL and when there is no corresponding parameter, the UE uses DMRS type 1. Parameter Max-Length represents the maximum number of OFDM symbols for DL front loaded DMRS, and len1 corresponds to a value of 1. Parameter PhaseTrackingRS configures DL PTRS and when the corresponding parameter does not exist or is cancelled, the UE assumes that there is no DL PTRS.

For DM-RS configuration type 1,

- when is scheduled with one codeword and antenna port mapping is allocated with indices of {2, 9, 10, 11, or 30} or the UE is scheduled with two codewords,

the UE may assume that all remaining orthogonal antenna ports are not related to transmission of the PDSCH to another UE.

For DM-RS configuration type 2,

- when is scheduled with one codeword and the antenna port mapping is allocated with indices of {2, 10, 23} or the UE is scheduled with two codewords,

the UE may assume that all remaining orthogonal antenna ports are not related to transmission of the PDSCH to another UE.

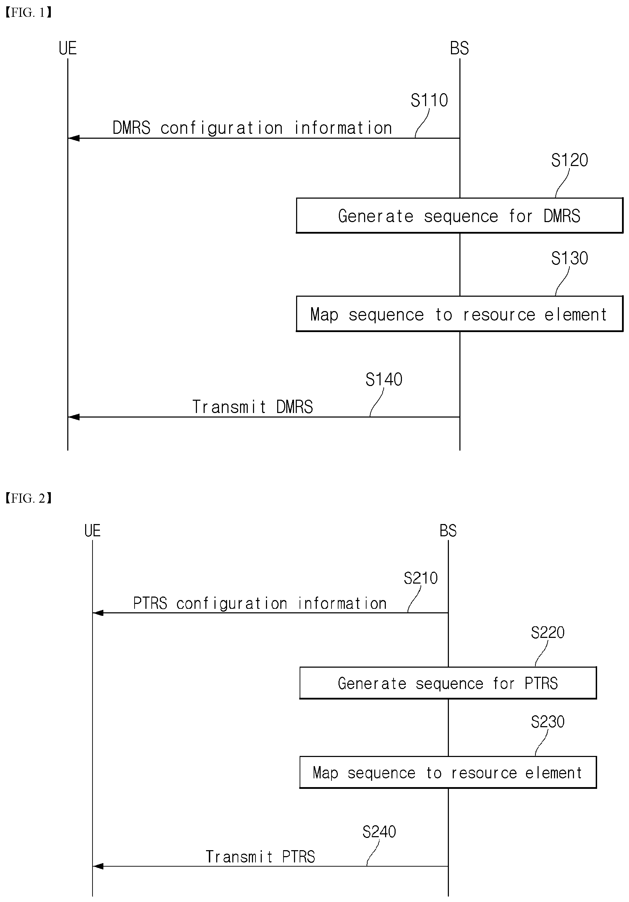

FIG. 1 is a flow chart illustrating an example of a DL DMRS procedure.

A base station transmits DMRS configuration information to a UE, in S110.

The DMRS configuration information may refer to DMRS-DownlinkConfig IE. The DMRS-DownlinkConfig IE may include parameter dmrs-Type, parameter dmrs-AdditionalPosition, parameter maxLength, parameter phaseTrackingRS, etc.

The parameter dmrs-Type is a parameter for selection of a DMRS configuration type to be used for DL. In NR, the DMRS may be classified into two configuration types: (1) DMRS configuration type 1 and (2) DMRS configuration type 2. The DMRS configuration type 1 is a type having a higher RS density in the frequency domain, and the DMRS configuration type 2 is a type having more DMRS antenna ports.

The parameter dmrs-AdditionalPosition is a parameter indicating the position of an additional DMRS in the DL. If the corresponding parameter is not present, the UE applies value of pos2. In the DMRS, a first position of a front-loaded DMRS may be determined according to the PDSCH mapping type (type A or type B), and an additional DMRS may be configured to support a high speed UE. The front-loaded DMRS occupies 1 or 2 consecutive OFDM symbols and is indicated by RRC signaling and downlink control information (DCI).

The parameter maxLength is a parameter indicating the maximum number of OFDM symbols for DL front-loaded DMRS. The parameter phaseTrackingRS is a parameter for configuring DL PTRS. If the corresponding parameter is not present or has been canceled, the UE assumes that there is no DL PTRS.

The base station generates a sequence used for DMRS, in S120.

The sequence for DMRS is generated according to Equation 1 below.

【Equation 1】

$$r(n) = \frac{1}{\sqrt{2}}(1 - 2 \cdot c(2n)) + j\frac{1}{\sqrt{2}}(1 - 2 \cdot c(2n + 1))$$

The pseudo-random sequence $c(i)$ is defined by 3GPP TS 38.211 5.2.1. That is, $c(i)$ may be a length-31 gold sequence using two m-sequences. A pseudo-random sequence generator is initialized by Equation 2 below.

【Equation 2】

$$c_{init} = \left(2^{17}\left(N_{symb}^{slot}n_{s,f}^{\mu} + l + 1\right)\left(2N_{ID}^{n_{SCID}} + 1\right) + 2N_{ID}^{n_{SCID}} + n_{SCID}\right) \bmod 2^{31}$$

where $l$ is the OFDM symbol number within the slot, and $n_{s,f}^{\mu}$ is the slot number within a frame.

$N_{ID}^{0}, N_{ID}^{1} \in \{0,1,...,65535\}$ are given by the higher-layer parameter *scramblingID0* and *scramblingID1,* respectively, in the *DMRS-DownlinkConfig* IE if provided and the PDSCH is scheduled by PDCCH using DCI format 1_1 with the CRC scrambled by C-RNTI, MCS-C-RNTI, or CS-RNTI.

- $N_{ID}^{0} \in \{0,1,...,65535\}$ is given by the higher-layer parameter *scramblingID0* in the *DMRS-DownlinkConfig* IE if provided and the PDSCH is scheduled by PDCCH using DCI format 1_0 with the CRC scrambled by C-RNTI, MCS-C-RNTI, or CS-RNTI.

- $N_{ID}^{n_{SCID}} = N_{ID}^{cell}$, otherwise, the quantity $n_{SCID} \in \{0, 1\}$ is given by the DMRS sequence initialization field in the DCI associated with the PDSCH transmission if DCI format 1_1 is used.

The base station maps the generated sequence to a resource element, in S130. Here, the resource element may mean including at least one of time, frequency, antenna port, or code.

The base station transmits the DMRS to the UE on the resource element, in S140. The UE receives the PDSCH using the received DMRS.

UE DMRS transmission procedure

A DMRS related operation for receiving the PUSCH will be described. As described above, UL means signal transmission (or communication) from the UE to the BS. The UL DMRS related operation is similar to the DL DMRS related operation described above, and names of the parameters related to DL may be replaced with the names of parameters related to UL.

That is, DMRS-DownlinkConfig IE may be replaced with DMRS-UplinkConfig IE, the PDSCH mapping type may be replaced with a PUSCH mapping type, and the PDSCH may be replaced with the PUSCH. In addition, in the DL DMRS related operation, the BS may be replaced with the UE and the UE may be replaced with the BS. Sequence generation for the UL DMRS may be defined differently according to whether transform decoding being enabled.

More specifically, in respect to the DMRS, when cyclic prefix orthogonal frequency division multiplexing (CP-OFDM) is used (or when transform precoding is not enabled), a PN sequence is used and when Discrete Fourier Transform-spread-OFDM (DFT-s-OFDM) is used (when the transform precoding is enabled), a ZC sequence having a length of 30 or more is used.

Table 2 below is a table showing one example of DMRS-UplinkConfig IE used for configuring uplink DMRS for the PUSCH.

[Table 2]

```
-- ASN1START
-- TAG-DMRS-UPLINKCONFIG-START

DMRS-UplinkConfig ::=                    SEQUENCE {
    dmrs-Type                                          ENUMERATED    {type2}
OPTIONAL,     -- Need S
    dmrs-AdditionalPosition                       ENUMERATED    {pos0,   pos1,   pos3}
OPTIONAL,     -- Need S
    phaseTrackingRS                            SetupRelease  {  PTRS-UplinkConfig  }
OPTIONAL,     -- Need M
    maxLength                                       ENUMERATED   {len2}
OPTIONAL,     -- Need S


    transformPrecodingDisabled       SEQUENCE {
        scramblingID0                                INTEGER    (0..65535)
OPTIONAL,     -- Need S
        scramblingID1                                INTEGER    (0..65535)
OPTIONAL,     -- Need S
        ...
    }
```

```
OPTIONAL,        -- Need R
    transformPrecodingEnabled          SEQUENCE {
        nPUSCH-Identity                                                     INTEGER(0..1007)
OPTIONAL,        -- Need S
        sequenceGroupHopping                                     ENUMERATED    {disabled}
OPTIONAL,        -- Need S
        sequenceHopping                                          ENUMERATED    {enabled}
OPTIONAL,        -- Need S
        ...
    }
OPTIONAL,        -- Need R
    ...
}


-- TAG-DMRS-UPLINKCONFIG-STOP
-- ASN1STOP
```

In Table 2, parameter dmrs-AdditionalPosition represents a location for additional DM-RS in UL and when there is no corresponding parameter, the UE applies a pos2 value. Parameter Dmrs-Type represents selection of the DMRS type to be used for UL and when there is no corresponding parameter, the UE uses DMRS type 1.

Parameter Max-Length represents the maximum number of OFDM symbols for UL front loaded DMRS, and len1 corresponds to a value of 1. Parameter PhaseTrackingRS configures UL PTRS. Parameter transformPrecodingdisabled indicates a DMRS-related parameter for Cyclic Prefix OFDM. Parameter transformPrecodingEnabled indicates DMRS-related parameters for DFT-s-OFDM (Transform Precoding).

Hereinafter, the UE DM-RS transmission procedure will be described in more detail.

When the transmitted PUSCH is neither scheduled by DCI format 0_1 with CRC scrambled by C-RNTI, CS-RNTI, or MCS-C-RNTI nor corresponds to a configured grant, the UE uses a single symbol front-loaded DM-RS of configuration type 1 on DM-RS port 0, and the remaining REs that are not used for DM-RS in the symbols are not used for any PUSCH transmission except for a PUSCH with an allocated duration of 2 or less OFDM symbols with disabled transform precoding. Additional DM-RS may be transmitted according to a scheduling type and PUSCH duration by considering whether frequency hopping is enabled.

When the frequency hopping is disabled: The UE assumes that dmrs-AdditionalPosition is equal to 'pos2', and up to 2 additional DM-RSs may be transmitted according to the PUSCH duration.

When the frequency hopping is enabled, the UE assumes that dmrs-AdditionalPosition is equal to 'pos1', and up to 1 additional DM-RSs may be transmitted according to the PUSCH duration.

When the transmitted PUSCH is scheduled by activation DCI format 0_0 with CRC scrambled by CS-RNTI, the UE uses a single symbol front-loaded DM-RS of a configuration type provided by a higher-layer parameter dmrs-Type of configuredGrantConfig on DM-RS port 0, and the remaining REs that are not used for DM-RS in the symbols are not used for any PUSCH transmission except for a PUSCH with an allocated duration of two or less OFDM symbols with disabled transform precoding, and an additional DM-RS having dmrs-AdditionalPosition from configuredGrantConfig may be transmitted based on the scheduling type and the PUSCH duration considering whether the frequency hopping is enabled.

When the transmitted PUSCH is scheduled by DCI format 0_1 having CRC scrambled by C-RNTI, CS-RNTI, or MCS-RNTI or corresponds to the configured grant,

- The UE may be configured as the higher layer parameter dmrs-Type in DMRS-UplinkConfig and the configured DM-RS configuration type is used for transmitting the PDSCH.
- The UE may be configured as a maximum number of front-loaded DMRS symbols for the PUSCH by the higher layer parameter maxLength in DMRS-UplinkConfig.

When the UE transmitting the PUSCH is configured as higher layer parameter phaseTrackingRS in DMRS-UplinkConfig, the UE may assume that the configurations do not simultaneously occur for the transmitted PUSCH.

- Each random DM-RS port of 4-7 or 6-11 is scheduled by the UE for DM-RS configuration type 1 and type 2 and the PT-RS is transmitted from the UE.

For the PUSCH scheduled by DCI format 0_1, by activation DCI format 0_1 having the CRC scrambled by the CS-RNTI or by configured grant type 1 configuration, the UE assumes that a DM-RS CDM group is not used for data transmission.

Phase Tracking Reference Signal (PTRS)

In the 5G NR standard, Phase-tracking reference signal (PTRS) was introduced to compensate for impairment caused by phase noise in A high-frequency band. The phase noise causes common phase error (CPE) and inter-carrier interference (ICI) in the frequency domain.
Hereinafter, the DL PTRS and UL PTRS related operations will be described in detail.

DL PTRS related operation

FIG. 2 is a flow chart illustrating an example of a DL PTRS procedure.
A base station transmits PTRS configuration information to a UE, in S210. The PTRS configuration information may refer to PTRS-DownlinkConfig IE. The PTRS-DownlinkConfig IE may include frequencyDensity parameter, time-Density parameter, epre-Ratio parameter, resourceElementOffset parameter, etc.
The frequencyDensity parameter is a parameter representing a presence and a frequency density of a DL PTRS as a function of scheduled BW. The timeDensity parameter is a parameter representing the presence and a time density of the DL PTRS as a function of modulation and coding scheme (MCS). The epre-Ratio parameter is a parameter representing an energy per resource element (EPRE) between a PTRS and a PDSCH.
The base station generates a sequence used for the PTRS, in S220. As shown in Equation 3 below, the sequence for the PTRS is generated using a DMRS sequence of the same subcarrier. The sequence generation for the PTRS may be differently defined depending on whether transform precoding has been enabled, and Equation 3 below represents an example where the transform precoding is disabled.

【Equation 3】

$$r_k = r(2m + k')$$

Here, $r(2m + k')$ is a DMRS given in a location $l_0$ and a subcarrier $k$.
That is, the sequence of the PTRS uses a sequence of the DMRS, and more specifically, the sequence of the PTRS in the subcarrier k is the same as a sequence of the DMRS in the subcarrier k.
The base station maps the generated sequence to a resource element, in S230. Here, the resource element may mean including at least one of time, frequency, antenna port or code.
A location of the PTRS in the time domain starts from a starting symbol of PDSCH allocation and is mapped at a specific symbol spacing. If a DMRS symbol is present, the mapping is performed from a symbol next to the DMRS symbol. The specific symbol spacing may be 1, 2 or 4 symbols.
A frequency location of the PTRS in relation to resource element mapping of the PTRS is determined by a frequency location of an associated DMRS port and higher layer parameter UL-PTRS-RE-offset. Here, UL-PTRS-RE-offset is included in PTRS configuration and indicates a subcarrier offset for UL PTRS for CP-OFDM.
For DL, the PTRS port is related to a DMRS port of a lowest index among scheduled DMRS ports. And, for UL, the base station configures which DMRS port is related to the PTRS port via UL DCI.
The base station transmits the PTRS to the UE on a resource element, in S240.

UL PTRS related operation

An UL PTRS related operation is similar to the DL PTRS related operation mentioned above, and the names of the parameters related to the DL PTRS may be replaced by the names of the parameters related to the UL PTRS. That is, PTRS-DownlinkConfig IE may be replaced by PTRS-UplinkConfig IE, and in the DL PTRS related operation, the base station may be replaced by the UE and the UE may be replaced by the base station. In the same manner, the sequence generation for the PTRS may be differently defined depending on whether transform precoding has been enabled.

Downlink transmission and reception operations

The eNB may schedule downlink transmission such as the frequency/time resource, the transport layer, a downlink precoder, the MCS, etc. Specifically, the eNB may determine a beam for PDSCH transmission to the UE.

In addition, the UE may receive Downlink Control Information (DCI) for downlink scheduling (i.e., including scheduling information of the PDSCH) on the PDCCH (S702). DCI format 1_0 or DCI format 1_1 may be used for the downlink scheduling and specifically, DCI format 1_1 may include information such as the following examples: Identifier for DCI formats, Bandwidth part indicator, Frequency domain resource assignment, Time domain resource assignment, PRB bundling size indicator, Rate matching indicator, ZP CSI-RS trigger, Antenna port(s), Transmission configuration indication (TCI), SRS request, and Demodulation Reference Signal (DMRS) sequence initialization.

In particular, according to each state/index indicated in an antenna port(s) field, the number of DMRS ports may be scheduled, and single-user (SU)/multi-user (MU) transmission scheduling is also available. Specifically, the order of DMRS ports corresponding to the number of CWs may be predefined depending on dmrs-type and maxLength, and the number and/or order of DMRS ports may be indicated via an antenna port field of DCI.

In addition, the TCI field consists of 3 bits, and the QCL for the DMRS may be dynamically indicated by indicating a maximum of 8 TCI states according to the TCI field value. The UE may receive downlink data from the base station on the PDSCH. When the UE detects a PDCCH including DCI format 1_0 or 1_1, the UE may decode the PDSCH according to an indication by the corresponding DCI.

Here, when the UE receives a PDSCH scheduled by DCI format 1_1, a DMRS configuration type may be configured by higher layer parameter "dmrs-Type" in the UE and the DMRS configuration type is used for receiving the PDSCH. Further, in the UE, the maximum number of front-loaded DMRS symbols for the PDSCH may be configured by higher layer parameter "maxLength."

In the case of DMRS configuration type 1, when a single codeword is scheduled and an antenna port mapped to an index of {2, 9, 10, 11, or 30} is designated in the UE or when two codewords are scheduled in the UE, the UE assumes that all remaining orthogonal antenna ports are not associated with PDSCH transmission to another UE. Alternatively, in the case of DMRS configuration type 2, when a single codeword is scheduled and an antenna port mapped to an index of {2, 10, or 23} is designated in the UE or when two codewords are scheduled in the UE, the UE assumes that all remaining orthogonal antenna ports are not related to PDSCH transmission to another UE.

UL transmission/reception operation

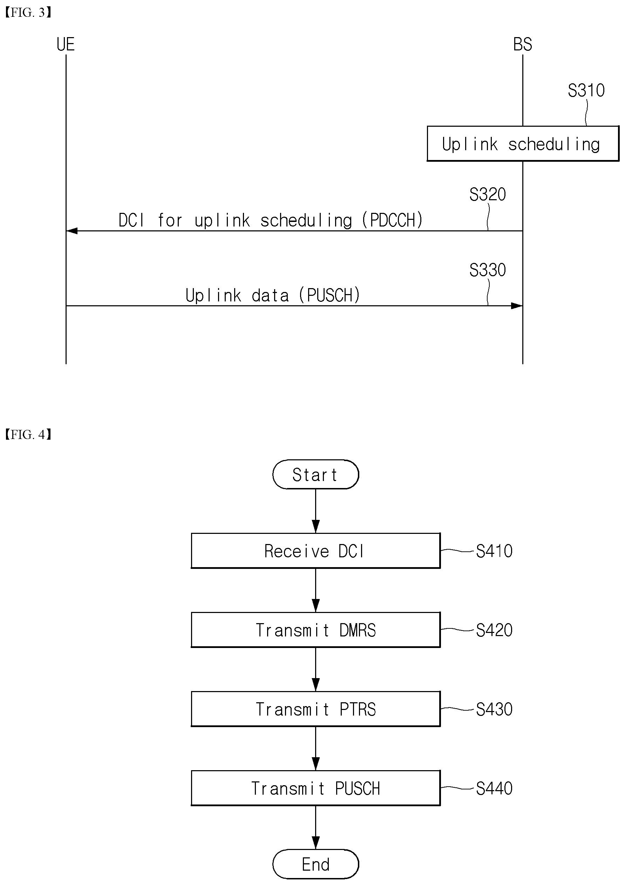

FIG. 3 illustrates an example of an uplink transmission and reception operation. Referring to the FIG. 3, the eNB may schedule uplink transmission such as the frequency/time resource, the transport layer, an uplink precoder, the MCS, etc., (S301). In particular, the eNB may determine a beam for PUSCH transmission of the UE through the beam management operations described above. And, the UE may receive, from the eNB, DCI for uplink scheduling (i.e., including scheduling information of the PUSCH) on the PDCCH (S302).

DCI format 0_0 or 0_1 may be used for the uplink scheduling and in particular, DCI format 0_1 may include information such as the following examples: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter "usage" may be indicated by an SRS resource indicator field. Further, "spatialRelationInfo" may be configured for each SRS resource and a value of "spatialRelationInfo" may be one of {CRI, SSB, and SRI}.

In addition, the UE may transmit the uplink data to the eNB on the PUSCH (S303). When the UE detects a PDCCH including DCI format 0_0 or 0_1, the UE may transmit the corresponding PUSCH according to the indication by the corresponding DCI. two schemes(Codebook based transmission scheme and non-codebook based transmission scheme) are supported for PUSCH transmission.

In the case of the codebook based transmission, when higher layer parameter txConfig" is set to "codebook", the UE is configured to the codebook based transmission. On the contrary, when higher layer parameter txConfig" is set to "nonCodebook", the UE is configured to the non-codebook based transmission. When higher layer parameter "txConfig" is not configured, the UE does not predict that the PUSCH is scheduled by DCI format 0_1. When the PUSCH is scheduled by DCI format 0_0, the PUSCH transmission is based on a single antenna port. In the case of the codebook based transmission, the PUSCH may be scheduled by DCI format 0_0, DCI format 0_1, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI.

Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter "nrofSRS-Ports". When the UE is set to higher layer parameter "txConfig" set to "codebook", at least one SRS resource is configured in the UE. An SRI indicated in slot n is associated with most recent transmission of the SRS resource identified by the SRI and here, the SRS resource precedes PDCCH (i.e., slot n) carrying the SRI.

In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter "srs-ResourceIndicator". The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter "usage" set to "nonCodebook". The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

**Multi-Transmission/Reception point (TRP) related operation**

An M-TRP transmission scheme in which M TRPs transmit data to one user equipment (UE) may be largely divided into two types, eMBB M-TRP transmission which is a scheme for increasing a transmission rate and URLLC M-TRP transmission which is a scheme for increasing a reception success rate and reducing latency.

Hereinafter, in the methods proposed in the present disclosure, DL MTRP-URLLC means that multiple TRPs transmit the same data/DCI using multiple TRPs by using different layer/time/frequency resources. For example, TRP 1 transmits the same data/DCI in resource 1 and TRP 2 transmits the same data/DCI in resource 2. A UE configured with the DL MTRP-URLLC transmission scheme receives the same data/DCI using different layer/time/frequency resources. At this time, the UE is instructed by the BS which QCL RS/type (i.e., DL TCI state) to use in the layer/time/frequency resources receiving the same data/DCI. For example, when the same data/DCI is received from resource 1 and resource 2, the DL TCI state used by resource 1 and the DL TCI state used by resource 2 are indicated. High reliability may be achieved because the UE receives the same data/DCI through both Resource 1 and Resource 2. The DL MTRP URLLC may be applied to PDSCH/PDCCH.

Conversely, UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. At this time, the UE is instructed by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used by resource 1 and the UL TCI state used by resource 2 are indicated. The UL MTRP URLLC may be applied to PUSCH/PUCCH.

SDCI or MDCI based MTRP transmission

Further, in terms of downlink control information (DCI) transmission, the multiple (M)-TRP transmission scheme may be divided into i) a multiple (M)-DCI based M-TRP transmission scheme in which each TRP transmits different DCI and ii) a single (S)-DCI based M-TRP transmission scheme in which one TRP transmits the DCI. As an example, in the case of the S-DCI, since all scheduling information for data transmitted by M TRPs should be delivered through one DCI, the S-DCI may be used in an ideal backhaul (BH) environment in which two TRPs may be dynamically coordinated with each other.

R16 NR MTRP transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a scheme in which each TRP schedules and transmits PDSCH through DCI. That is, TRP 1 transmits PDSCH 1 through DCI 1, and TRP 2 transmits PDSCH 2 through DCI 2. When PDSCH 1 and PDSCH 2 overlap in the same frequency time resource, two PDSCHs are received for the same RE, which increases resource efficiency and increases a transmission capacity. To this end, the R16 standard introduces a CORESET pool, which is a group of multiple CORESETs, and TRP 1 transmits the PDCCH through a CORESET belonging to CORESET pool 0, and the PDSCH scheduled by the corresponding PDCCH is transmitted by TRP 1. TRP 2 transmits the PDCCH through a CORESET belonging to CORESET pool 1, and the PDSCH scheduled by the PDCCH is transmitted by TRP 2. Specific TRP may also schedule PUSCH transmission to the UE through a CORESET belonging to each COERSET pool. In respect to the PUCCH, TRP 1 schedules some PUCCH resources to receive the UCI, and TRP 2 schedules remaining PUCCH resources to receive the UCI. In the case of the PUSCH or the PUCCH, channels scheduled/used by each TRP are TDMed with each other, and overlapping does not occur, so an increase in transmission capacity may not be anticipated, but the UE may transmit independent PUSCHs/PUCCHs to TRPs 1 and 2.

Further, the UE may recognize PUSCH (or PUCCH) scheduled by DCI received by different CORESETs (or CORESETs which belong to different CORESET groups) as PUSCH (or PUCCH) transmitted to different TRPs or PUSCH (or PUCCH) of different TRPs. Further, a scheme for UL transmission (e.g., PUSCH/PUCCH) transmitted to different TRPs may be applied equally even to UL transmission (e.g., PUSCH/PUCCH) transmitted to different panels which belong to the same TRP.

R17 NR MTRP transmission

The R17 NR standard supports MTRP PDCCH repeat transmission, MTRP PDCCH/PDSCH SFN transmission, S-DCI based MTRP PUSCH repeat transmission, and single PUCCH resource based MTRP PUCCH repeat transmission. All of these transmission techniques repeatedly transmit the same contents (i.e., DCI or UL TB or UCI) with URLLC target enhancement to increase reliability. In case of MTRP PDCCH repeat transmission, the MTRP PDCCHs are TDM or FDM, and repeatedly transmitted, MTRP PDCCH/PDSCH SFN is repeatedly transmitted in the same time/frequency/layer, in S-DCI based MTRP PUSCH repeat transmission, S-DCI based MTRP PUSCH is TDM and repeatedly transmitted, and in single PUCCH resource based MTRP PUCCH repeat transmission, single PUCCH resource based MTRP PUCCH is TDM and repeatedly transmitted.

R17 MTRP SFN PDCCH

As a special case of MTRP PDCCH repeat transmission, multiple TRPs may repeatedly transmit the same DCI through the same time/frequency/DMRS port, and this may be called SFN PDCCH transmission. However, for SFN PDCCH transmission, the BS configures multiple TCI states in one CORESET instead of configuring multiple CORESETs in which different TCI states are configured. When the UE receives a PDCCH candidate through an SS set connected to one CORESET, the UE performs channel estimation of the PDCCH DMRS using all of the multiple TCI states and attempts decoding.

R17 MTRP SFN PDSCH

When the MTRP PDSCH is repeatedly transmitted, the two TRPs repeatedly transmit the corresponding channel on different resources. However, as a special case, even when two TRPs use the same resource, that is, when two TRPs repeatedly transmit the same channel through same frequency, time, and layer (= DMRS port), the reliability of the corresponding channel may be enhanced. In this case, resources are not distinguished in the same channel which is repeatedly transmitted, so the resources are collected and received in air, and a receiver recognized the channels as one channel. In the R17 NR standard, two DL TCI states may be configured for PDSCH DMRS reception for PDSCH SFN transmission.

For convenience of explanation, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs can be recognized as different TCI states to the UE, and a case where the UE receives/transmits data/DCI/UCI using TCI state 1 means receiving/transmitting the data/DCI/UCI from/to TRP 1.

In the present disclosure, Transmission Occasion (TO) means each channel transmitted at a different time when multiple channels are TDMed, each channel transmitted on a different frequency/RB when multiple channels are FDMed, and each channel transmitted on a different layer/beam/DMRS port when multiple channels are SDMed. One TCI state is applied to each TO. When the same channel is repeatedly transmitted, a complete DCI/data/UCI is transmitted in one TO, and the receiver receives multiple TOs to increase a reception success rate.

R17 SDCI based multi-TB PUSCH/PDSCH scheduling

In R17 NR, a scheme is supported in which a single DCI schedules multiple PUSCH/PDSCH simultaneously in an ultrahigh frequency band (beyond 5.26 GHz). For example, multiple TDRAs (=TOs) may be indicated at once through the TDRA field of the PUSCH scheduling DCI, and different TBs are transmitted for each TO through the PUSCH. FDRA, MCS, TPMI, and SRI values of the DCI are commonly applied to multiple scheduled TBs. Further, NDI and RV for each TB are individually indicated through the DCI, and a HARQ number is indicated as a single value, but increases sequentially in a TO order based on an initial TO.

Simultaneous Transmission across Multi-panels (STxMP) related description

In R18, a method in which the UE simultaneously multiple channels/RSs of the same type or a method in which the same UE simultaneously transmits multiple channels/RSs of different types is discussed. In the case of an existing UE, an operation of transmitting multiple channels/RSs at one time is restricted (e.g., it is possible to simultaneously transmit multiple SRS resources of different SRS sets for UL beam measurement, but it is impossible to simultaneously transmit multiple PUSCHs), but an advanced UE in the future will be able to ease these restrictions and simultaneously transmit multiple channels or RSs using multiple transmission panels, and the UE is called STxMP UE. For example, two PUSCHs corresponding to two UL TBs are scheduled on the same RE, and Spatial relation RS 1 and PC parameter Set 1 (i.e., UL TCI state 1) and Spatial relation RS 2 and PC parameter Set 2 (i.e., UL TCI state 2) are configured for PUSCH 1 and 2 transmission, respectively. The UE transmits PUSCH 1 using panel 1 corresponding to UL TCI state 1 and at the same time, transmits PUSCH 2 using panel 2 corresponding to UL TCI state 2.

When the base station schedules the PUSCH through the DCI, the BS may indicate whether to transmit the PUSCH in STxMP, whether to transmit the PUSCH by a single panel, whether to perform MTRP PUSCH repeat transmission, etc. Of course, the UE must have an STxMP capability and an STxMP mode must be enabled in advance through RRC signaling, etc. For this purpose, an existing SRS resource set indication field may be redefined and used, or a new DCI field may be introduced.

Unified TCI framework related description

In R17, the UL TCI state may also be indicated in addition to the DL DCI state through a DL DCI (e.g., DCI format 1-1 or 1-2), or only the UL TCI state may be indicated without indicating the DL TCI state. As a result, the schemes used in the existing R15/R16 to configure UL beam and power control (PC) are replaced in R17 with the UL TCI state indication method. More specifically, in R17, one UL TCI state may be indicated through the TCI field of DL DCI, and the UL TCI state may be applied to all PUSCHs and all PUCCHs after a predetermined time called beam application time, and may be applied to some or all of the indicated SRS resource sets. In R18, a scheme to indicate multiple UL TCI states (and/or DL TCI states) through the TCI field of DL DCI is under discussion.

The contents (the DMRS, the PTRS, the UL transmission/reception operation, the MTRP related operation, etc.) described above may be applied in combination with methods proposed in the present disclosure to be described below or may be supplemented to clarify technical features of the methods proposed in the present disclosure. Methods to be described below are just distinguished for convenience and it is needless to say that some components of any one method may be substituted with some components of another method or may be applied in combination with each other.

In the present disclosure, 'port' and 'antenna port' may be interpreted as the same meaning. For example, PTRS (DMRS) port means PTRS (DMRS) antenna port, and vice versa.

In the present disclosure, 'DMRS (or PTRS)' may mean 'DM-RS (or PT-RS)' and vice versa.

Table 3 below shows an agreements related to DMRS enhancement.

[Table 3]

| Agreement |
| --- |
| - Study the following potential DMRS enhancement for potential support of more than 4 layers SU-MIMO PUSCH. |
| • Extend DMRS port allocation table for rank 5~8 |
| ∘ Note: DL DMRS table can be a reference |
| • Enhancement for DMRS to PTRS mapping |
| - Study whether to utilize Rel. 18 DMRS ports for more than 4 layers SU-MIMO PUSCH. |
| - Note: the above study does not imply more than 4 layers SU-MIMO PUSCH is supported. |
| - Note: other study for potential DMRS enhancement for potential support of more than 4 layers SU-MIMO PUSCH is not precluded. |

A maximum number of Tx ports supported for uplink transmission in an existing NR systems is 4 (i.e., Rank 4). To achieve more coverage and higher throughput, 8Tx UL transmission may be considered in Rel-18. When 8 Tx antenna ports are used, there is room to increase the number of layers (more than 4 layers) for PUSCH transmission. To increase system throughput performance, it may be desirable to support up to eight layers (i.e., Rank 8).

The existing system may support up to 2 UL PT-RS (ports) considering partial/non-coherent 4 ports. Meanwhile, for the 8 Tx antenna ports, depending on the antenna implementation, there may be no coherence at all among the 8 antenna ports, or 4 pairs of coherent antenna ports may be considered. In this case, two PT-RS ports may not be sufficient for phase noise estimation from more than two phase noise sources. Therefore, increasing the maximum number of PT-RS ports may be considered.

Based on the above-described background, examples for association between DMRS ports and PTRS ports are examined.

<Proposal 1>

Hereinafter, a method for associating the DMRS port and the PTRS port through the DCI is examined.

As one example, a UE in embodiments to be described below may be a UE that supports UL transmission based on 8 Tx antenna ports and supports Rank 5 or higher. In other words, the embodiments to be described below may be applied to UL transmission in which a number of layers is 5 or more.

Further, the embodiments to be described below may be described based on a UE PTRS transmission procedure (UL PTRS), but may also be applied to a PTRS reception procedure (DL PTRS) by the same scheme. However, in the PTRS transmission procedure (UL PTRS), the PTRS-DMRS association may be determined for each rank indicated based on SRI or TPMI.

The PTRS-DMRS association means an association between the PTRS port(s) and the DMRS port(s). For example, the PTRS-DMRS association field of the DCI means an association between the PTRS port(s) and the DMRS port(s).

Table 4 below shows a PTRS-DMRS association field of DCI format 0_1 (DCI format 0_2).

[Table 4]

| |
|---|
| - PTRS-DMRS association - number of bits determined as follows<br>- 0 bit if *PTRS-UplinkConfig* is not configured in either *dmrs-UplinkForPUSCH-MappingTypeA* or *dmrs-UplinkFor-PUSCH-MappingTypeB* and transform precoder is disabled, or if transform precoder is enabled, or if *maxRank=1*;<br>- 2 bits otherwise, where Table 7.3.1.1.2-25/7.3.1.1.2-25A and 7.3.1.1.2-26 are used to indicate the association between PTRS port(s) and DMRS port(s) when one PT-RS port and two PT-RS ports are configured by *maxNrofPorts* in *PTRS-UplinkConfig* respectively, and the DMRS ports are indicated by the Antenna ports field. When the SRS resource set indicator field is present and *maxRank>2,* this field indicates the association between PTRS port(s) and DMRS port(s) corresponding to SRS resource indicator field and/or Precoding information and number of layers field according to Table 7.3.1.1.2-25 and 7.3.1.1.2-26. When the SRS resource set indicator field is present and equals "10" and "11" and *maxRank=2,* the MSB of this field indicates the association between PTRS port(s) and DMRS port(s) corresponding to SRS resource indicator and/or Precoding information and number of layers field, and the LSB of this field indicates the association between PTRS port(s) and DMRS port(s) corresponding to Second SRS resource indicator field and/or Second Precoding information field, according to Table 7.3.1.1.2-25A. |

Tables 5 to 7 below show tables defined to indicate the association(s) between the PTRS port(s) and the DMRS port(s) based on Table 4 above.

[Table 5]

Table 7.3.1.1.2-25: PTRS-DMRS association or Second PTRS-DMRS association for UL PTRS port 0

| Value | DMRS port |
|---|---|
| 0 | 1st scheduled DMRS port |
| 1 | 2nd scheduled DMRS port |
| 2 | 3rd scheduled DMRS port |
| 3 | 4th scheduled DMRS port |

[Table 6]

Table 7.3.1.1.2-25A: PTRS-DMRS association for UL PTRS port 0 or for the actual UL PT-RS port

| Value of MSB | DMRS port | Value of LSB | DMRS port |
|---|---|---|---|
| 0 | 1st scheduled DMRS port corresponding to SRS resource indicator field and/or Precoding information and number of layers field | 0 | 1st scheduled DMRS port corresponding to Second SRS resource indicator field and/or Second Precoding information field |
| 1 | 2nd scheduled DMRS port corresponding to SRS resource indicator field and/or Precoding information and number of layers field | 1 | 2nd scheduled DMRS port corresponding to Second SRS resource indicator field and/or Second Precoding information field |

[Table 7]

Table 7.3.1.1.2-26: PTRS-DMRS association or Second PTRS-DMRS association for UL PTRS ports 0 and 1

| Value of MSB | DMRS port | Value of LSB | DMRS port |
|---|---|---|---|
| 0 | 1st DMRS port which shares PTRS port 0 | 0 | 1st DMRS port which shares PTRS port 1 |
| 1 | 2nd DMRS port which shares PTRS port 0 | 1 | 2nd DMRS port which shares PTRS port 1 |

According to the existing scheme based on Table 4 above to Table 7 above, the PTRS-DMRS association may be indicated as follows.

Based on the maximum number of PTRS port being set to 1, a PTRS-DMRS association field (2 bits) may indicate an association between 1st to 4th scheduled DMRS ports and the PTRS port (see Table 4 and Table 5).

Based on the maximum number of PTRS ports being set to 2, MSB (1 bit) e.g., most significant bit, leftmost bit) of the PTRS-DMRS association field (2 bits) indicates that one of a 1st DMRS port and a 2nd DMRS port sharing PTRS port 0 is associated with PTRS port 0. LSB (1 bit) e.g., least significant bit, rightmost bit) of the PTRS-DMRS association field (2 bits) indicates that one of the 1st DMRS port and the 2nd DMRS port sharing PTRS port 1 is associated with PTRS port 1 (see Table 5, Table 6, and Table 7).

The maximum PTRS port number may mean a maximum number of UL PTRS ports indicated by the higher layer parameter maxNrotPorts.

For NCB PUSCH case, the 1st DMRS port and the 2nd DMRS port sharing PTRS port 0 (or PTRS port 1) may be distinguished/identified as follows.

For the 1st DMRS port and the 2nd DMRS port sharing PTRS port 0, the PTRS port index set in the SRS resource indicated by the SRI is 0 (e.g., ptrs-PortIndex in SRS-Resource is set to n0). In other words, the 1st DMRS port and the 2nd DMRS port sharing PTRS port 1 may correspond to an SRI field indicating the SRS resource with the PTRS port index set to 1.

For the 1st DMRS port and the 2nd DMRS port sharing PTRS port 1, the PTRS port index set in the SRS resource indicated by the SRI is 1 (e.g., ptrs-PortIndex in SRS-Resource is set to n1). In other words, the 1st DMRS port and the 2nd DMRS port sharing PTRS port 1 may correspond to an SRI field indicating the SRS resource with the PTRS port index set to 1.

For the CB PUSCH case, DMRS ports corresponding to layer(s) using PUSCH antenna ports 1000 and 1002 share PTRS 0, and DMRS ports corresponding to layer(s) using PUSCH antenna ports 1001 and 1003 share PTRS 1.

The settings/operations related to the PTRS port described above may be based on Table 8 below.

[Table 8]

38.214 section 6.2.3

For non-codebook based UL transmission, the actual number of UL PT-RS port(s) to transmit is determined based on SRI(s) in DCI format 0_1 and DCI format 0_2 or higher layer parameter *sri-ResourceIndicator* in *rrc-ConfiguredUplinkGrant.* When two SRS resource sets are configured in *srs-ResourceSetToAddModList* or *srs-ResourceSet-ToAddModListDCI-0-2* with higher layer parameter *usage* in *SRS-ResourceSet* set to 'noncodebook', the actual number of UL PT-RS port(s) to transmit corresponding to each SRS resource set is determined based on SRI(s) corresponding to the associated SRS resource set or higher layer parameter *sri-ResourceIndicator or sri-ResourceIndicator2* corresponding to the associated SRS resource set in *rrc-ConfiguredUplinkGrant.* **A UE is configured with the PT-RS port index for each configured SRS resource by the higher layer parameter *ptrs-PortIndex* configured by *SRS-Config* if the UE is configured with the higher layer parameter *phaseTrackingRS in DMRS-UplinkConfig.* If the PT-RS port index associated with different SRIs are the same, the corresponding UL DM-RS ports are associated to the one UL PT-RS port.**

For partial-coherent and non-coherent codebook-based UL transmission, the actual number of UL PT-RS port(s) is determined based on TPMI(s) and/or number of layers which are indicated by *'Precoding information and number of layers'* field(s) in DCI format 0_1 and DCI format 0_2 or configured by higher layer parameter *precodingAnd-NumberOfLayers*:

- if the UE is configured with the higher layer parameter *maxNrofPorts* in *PTRS-UplinkConfig* set to 'n2', the actual UL PT-RS port(s) and the associated transmission layer(s) are derived from indicated TPMI(s) as:

- **PUSCH antenna port 1000 and 1002 in indicated TPMI(s) share PT-RS port 0, and PUSCH antenna port 1001 and 1003 in indicated TPMI(s) share PT-RS port 1.**

- **UL PT-RS port 0 is associated with the UL layer 'x' of layers which are transmitted with PUSCH antenna port 1000 and PUSCH antenna port 1002 in indicated TPMI(s), and UL PT-RS port 1 is associated with the UL layer 'y' of layers which are transmitted with PUSCH antenna port 1001 and PUSCH antenna port 1003 in indicated TPMI(s), where 'x' and/or 'y' are given by DCI parameter *'PTRS-DMRS association'* as shown in DCI format 0_1 and DCI format 0_2 described in Clause 7.3.1 of [5, TS38.212].**

As described above, Release 18 may support UL transmissions of Rank 5 or higher by a UL 8Tx UE. However, as previously examined, the existing scheme (Table 4 to Table 8) may not support the indication for the PTRS-DMRS association for Rank 5 or higher.

In order to solve a problem that PTRS-DMRS association for Rank 5 or higher may not be indicated due to an increased number of DMRS ports (i.e., 8 DMRS ports), the following embodiments may be considered.

In one embodiment, when the maximum PTRS port number is set to 1, a 3-bit table (predefined/configured) may be utilized instead of a 2-bit table according to Table 5 described above. For example, a 3-bit PTRS-DMRS association field may indicate that one of the 1st scheduled DMRS port to the 8th scheduled DMRS port is associated with the PTRS port. For example, the embodiment may be applied to a full coherent environment. In other words, the (eight) DMRS ports may be full coherent antenna ports.

According to one embodiment, when the maximum PTRS port number is set to 2, a 4-bit table (predefined/-configured) may be utilized instead of the 2-bit table according to Table 6 (Table 7) described above.

For example, for the NCB PUSCH case, MSB 2 bits of the PTRS-DMRS association field (4 bits) may indicate that one of the 1st DMRS port to the 4th DMRS port sharing PTRS port 0 is associated with the PTRS port 0. LSB 2 bits of the PTRS-DMRS association field (4 bits) may indicate that one of the 1st DMRS port to the 4th DMRS port sharing PTRS port 1 is associated with the PTRS port 1.

For example, for the CB PUSCH case, 1) DMRS ports (i.e., 1st DMRS port to 4th DMRS port) corresponding to layer(s) using PUSCH antenna ports 1000, 1002, 1004, and 1006 may share PTRS port 0, and 2) DMRS ports (i.e., 1st DMRS port to 4th DMRS port) corresponding to layer(s) using PUSCH antenna ports 1001, 1003, 1005, and 1007 may share PTRS port 1. The MSB 2 bits of the PTRS-DMRS association field (4 bits) may indicate that one of the 1st DMRS port to the 4th DMRS port corresponding to the layer(s) using PUSCH antenna ports 1000, 1002, 1004, and 1006 is associated with PTRS port 0. The LSB 2 bits of the PTRS-DMRS association field (4 bits) MAY indicate that one of the 1st DMRS port to the 4th DMRS port corresponding to the layer(s) using PUSCH antenna ports 1001, 1003, 1005, and 1007 is associated with PTRS port 1.

Specific examples of the MSB 2 bits and LSB 2 bits described above are as follows. When a value of the PTRS-DMRS association field (4 bits) is '0110', i) the MSB 2 bits may mean '01', which is leftmost 2 bits in the 4 bits, and ii) the LSB 2 bits may mean '10', which is rightmost 2 bits in the 4 bits.

The DMRS port(s) indicated according to the above-described embodiment may be DMRS port(s) belonging to the same CDM group, but is not limited thereto. The indicated DMRS port(s) may be DMRS port(s) belonging to different CDM groups.

The existing scenario where two PTRS ports are used assumes that the phase noise source is different for each panel or TRP in a UE multi-panel and/or BS MTRP environment. By considering this, in an environment exceeding 4 layers (more than 4 layer environment), each PTRS port may be designed to be shared by DMRS ports within the same CDM group per panel/TRP. That is, DMRS port groups (or DMRS ports) that share the PTRS port may be based on the same CDM group.

The number of CDM groups may increase according to a DMRS design scheme for 5 to 8 layers. In this case, two port PTRSs may be mapped as follows.

As one example, one PTRS (PTRS port) may be mapped to DMRSs (DMRS ports) based on multiple CDM groups.

As one example, two PTRS ports may be mapped to DMRS ports based on a specific CDM group. As a specific example, when the number of layers is 8 (8 layers) and the number of PTRS ports is 2, each PTRS port may be shared by two layers (two DMRS ports) corresponding to a specific CDM group. An association between two DMRS ports and one PTRS port may be indicated based on the DCI.

In the case of a second example, a CDM group (or DMRS ports/port group) to which each PTRS port is to be mapped may be determined based on a rule or a configuration/indication of the BS. As one example, a rule for the CDM groups (DMRS port indices) to which each PTRS port is to be mapped may be predefined. As one example, the CDM groups (DMRS port indices) to which each PTRS port is to be mapped may be configured/indicated to the UE by the BS. At this time, the BS may transmit the corresponding information (i.e., the CDM group and/or DMRS port indices to which each PTRS port is to be mapped) to the UE through an RRC message and/or MAC-CE.

The BS may configure/indicate information the PTRS port to the UE based on MAC CE and/or RRC signaling.

<Proposal 2>

According to the existing scheme, a maximum of two PTRS ports are supported. According to this embodiment, a method of increasing the maximum number of supported PTRS ports and utilizing them may be considered. As one example, the maximum number of PTRS ports (e.g. 2) may be doubled, so that up to 4 PTRS ports may be utilized. At this time, the PTRS-DMRS association may be indicated as follows.

The existing 2-bit table (e.g., Tables based on Table 5 to Table 7) for the PTRS-DMRS association may be extended to the 4-bit table. In other words, a (predefined/configured) 4-bit table may be utilized to indicate the PTRS-DMRS association.

The PTRS-DMRS association field (4 bits) may represent values defined in the 4-bit table. Specifically, each 1 bit of the PTRS-DMRS association field (4 bits) may indicate the PTRS-DMRS association as in [1] to [4] below.

[1] 1 bit of the PTRS-DMRS association field (4 bits) may indicate that one of the 1st DMRS port and the 2nd DMRS port sharing PTRS port 0 is associated with the PTRS port 0.
[2] 1 bit of the PTRS-DMRS association field (4 bits) may indicate that one of the 1st DMRS port and the 2nd DMRS port sharing PTRS port 1 is associated with the PTRS port 1.
[3] 1 bit of the PTRS-DMRS association field (4 bits) may indicate that one of the 1st DMRS port and the 2nd DMRS port sharing PTRS port 2 is associated with the PTRS port 2.
[4] 1 bit of the PTRS-DMRS association field (4 bits) may indicate that one of the 1st DMRS port and the 2nd DMRS port sharing PTRS port 3 is associated with the PTRS port 3.

For the NCB PUSCH case, the 1st DMRS port and the 2nd DMRS port that share each PTRS port among the PTRS port 0 to the PTRS port 3 may be configured in the same manner as described above. That is, depending on whether the PTRS port index set to the indicated SRS resource is 0, 1, 2, or 3, the DMRS port(s) of the same channel as the corresponding SRS resource may be grouped. As an example, the DMRS port(s) of the same channel as the corresponding SRS resource may mean the DMRS port(s) corresponding to the SRI field indicating the corresponding SRS resource.

For the CB PUSCH case, DMRS ports sharing PTRS ports 0 to 3 may be configured as follows.

The DMRS ports (1st DMRS port and 2nd DMRS port) corresponding to layers using the PUSCH antenna ports 1000 and 1004 may share the PTRS port 0.

The DMRS ports (1st DMRS port and 2nd DMRS port) corresponding to layers using the PUSCH antenna ports 1001 and 1005 may share the PTRS port 1.

The DMRS ports (1st DMRS port and 2nd DMRS port) corresponding to layers using the PUSCH antenna ports 1002 and 1006 may share the PTRS port 2.

The DMRS ports (1st DMRS port and 2nd DMRS port) corresponding to layers using the PUSCH antenna ports 1003 and 1007 may share the PTRS port 3.

The DMRS port(s) indicated according to the above-described embodiment may be DMRS port(s) belonging to the same CDM group, but is not limited thereto. The indicated DMRS port(s) may be DMRS port(s) belonging to different CDM groups.

<Proposal 3>

It may be assumed that only a maximum of 4 layers are supported even if the number of Tx antenna ports supported by the UE is 8. In such a case, the following operations may be applied.

When the maximum PTRS port number is set to 1, the indication of the PTRS-DMRS association may be performed in the same manner as described above. When the maximum PTRS port number is set to 2, the existing defined table may be used as it is for the indication of the PTRS-DMRS association.

However, in the CB PUSCH case, the layer(s) related to each PTRS port must be configured to be distinguished. As one example, for PTRS-DMRS association, DMRS ports shared by each PTRS port may be defined/distinguished/-configured for each layer as in [1] and [2] below.

[1] DMRS ports corresponding to layers using the PUSCH antenna ports 1000, 1002, 1004, and 1006 may share the PTRS port 0.
[2] DMRS ports corresponding to layers using the PUSCH antenna ports 1001, 1003, 1005, and 1007 may share the PTRS port 1.

When the maximum PTRS port number is set to 4, each DMRS port among the 1st scheduled DMRS port to the 4th scheduled DMRS port may be mapped 1:1 to each PTRS port (i.e., one of the PTRS ports 0 to 3). For example, in rank 1, there is only the 1st scheduled DMRS port, so the 1st scheduled DMRS port may be connected/mapped to the PTRS port 0. At this time, the number of actual PTRS ports is determined as 1. In rank 2, i) the 1st DMRS Port and the 2nd DMRS Port and ii) the PTRS port 0 and the PTRS port 1 are connected/mapped, respectively. In rank 3, i) the 1st DMRS Port, the 2nd DMRS port, and the 3rd DMRS Port and ii) the PTRS port 0, the PTRS port 1, and the PTRS port 2 are connected/mapped, respectively. That is, in the above case, the PTRS-DMRS association field may not be utilized to indicate the PTRS-DMRS association.

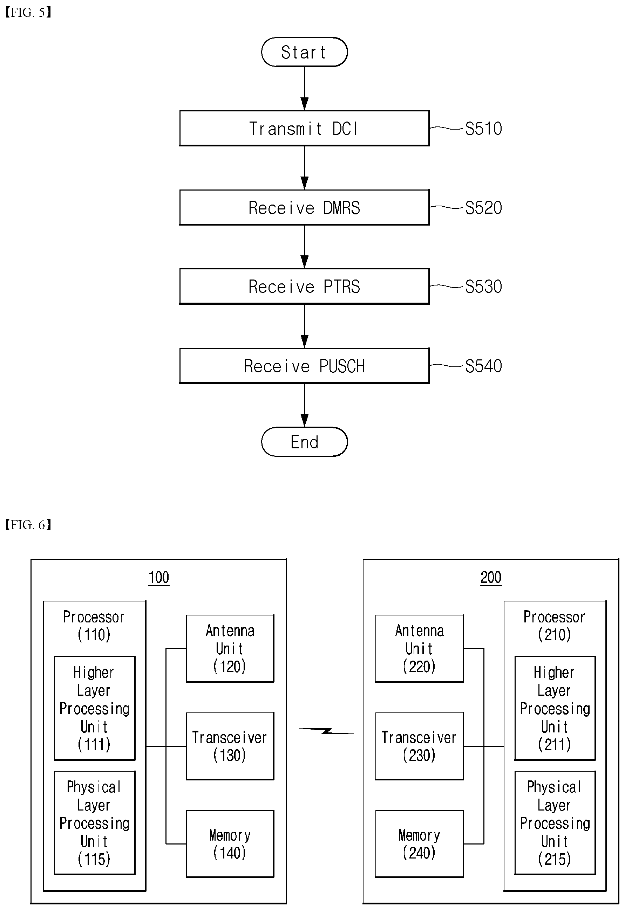

In terms of implementation, the operations (e.g., operations based on at least one of Proposals 1 to 3) of the BS/UE according to the above-described embodiments may be processed by apparatuses (e.g., 100 and 200) in FIG. 6 to be described below.

Further, the operations (e.g., operations based on at least one of proposals 1 to 3) of the BS/UE according to the above-described embodiment may be stored in memories (e.g., 140 and 204 in FIG. 6) in the form of an instruction/program (e.g., instruction or executable code) for driving at least one processor (e.g., 110 and 210 in FIG. 6).

Hereinafter, the above-described embodiments will be described in detail with reference to FIGS. 4 and 5 in terms of the operations of the UE and the BS. Methods to be described below are just distinguished for convenience and it is needless to say that some components of any one method may be substituted with some components of another method or may be applied in combination with each other.

FIG. 4 is a flowchart for describing a method performed by a user equipment according to an embodiment of the present disclosure.

Referring to FIG. 4, the method performed by the UE in the wireless communication system according to an embodiment of the present disclosure includes a DCI receiving step (S410), a DMRS transmitting step (S420), a PTRS transmitting step (S430), and a PUSCH transmitting step (S440).

In S410, the UE receives downlink control information (DCI) for scheduling a physical uplink shared channel (PUSCH) from the BS. The DCI may include an antenna port field. One or more demodulation reference signal (DMRS) ports may be indicated based on the antenna port field.

According to an embodiment, a transmission scheme related to the PUSCH may be configured as a codebook or a non-codebook. The number of layers related to the PUSCH may be larger than 4. For example, a rank related to the PUSCH may be 5 or higher.

In S420, the UE transmits the DMRS based on the one or more DMRS ports to the BS.

In S430, the UE transmits, to the BS, the PTRS based on at least one phase tracking reference signal (PTRS) port.

According to an embodiment, the DCI may include a PTRS-DMRS association field. The PTRS-DMRS association field may indicates an association between the one or more DMRS ports and the least one PTRS port.

According to an embodiment, based on a maximum number of the at least one PTRS ports being 1, the PTRS-DMRS association field may be based on a 3 bit value indicating one of eight DMRS ports. The embodiment may be based on Proposal 1 above.

According to an embodiment, based on the maximum number of the at least one PTRS ports being 2,

the PTRS-DMRS association field may be based on a 4 bit value. The embodiment may be based on Proposal 1 above.

A 2 bit value (e.g., MSB 2 bit) of the 4 bit value may indicate one of four DMRS ports sharing a first PTRS port.

The remaining 2 bit value (e.g., LSB 2 bit) of the 4 bit value may indicate one of four DMRS ports sharing a second PTRS port.

Based on the transmission scheme related to the PUSCH being configured as the codebook,

the first PTRS port may be related to at least one first layer of the layers related to the PUSCH, and
the second PTRS port may be related to at least one second layer of the layers related to the PUSCH.

The at least one first layer may be related to PUSCH antenna ports 1000, 1002, 1004, and 1006. The at least one second layer may be related to PUSCH antenna ports 1001, 1003, 1005, and 1007.

According to an embodiment, based on the maximum number of the at least one PTRS ports being 4, the PTRS-DMRS association field may be based on a 4 bit value. The embodiment may be based on Proposal 2 above.

Each bit value of the 4 bit value may indicate one of two DMRS ports sharing each PTRS port among four PTRS ports. Hereinafter, this will be described in more detail.

A first bit value of the 4 bit value indicates one of two DMRS ports sharing a first PTRS port.

A second bit value of the 4 bit value may indicate one of two DMRS ports sharing a second PTRS port.

A third bit value of the 4 bit value may indicate one of two DMRS ports sharing a third PTRS port.

A fourth bit value of the 4 bit value may indicate one of two DMRS ports sharing a fourth PTRS port.

As one example, the first bit value to the fourth bit value may be distinguished in an order from a most significant bit (MSB) to a least significant bit (LSB) of the 4 bit value. That is, the MSB of the 4 bit value may be the first bit value and the LSB of the 4 bit value may be the fourth bit value.

As one example, the first bit value to the fourth bit value may be distinguished in an order from the LSB to the MSB of the 4 bit value. That is, the LSB of the 4 bit value may be the first bit value and the MSB of the 4 bit value may be the fourth bit value.

Based on the transmission scheme related to the PUSCH being configured as the codebook,

the first PTRS port may be related to at least one first layer of the layers related to the PUSCH,
the second PTRS port may be related to at least one second layer of the layers related to the PUSCH,
the third PTRS port may be related to at least one third layer of the layers related to the PUSCH, and
the fourth PTRS port may be related to at least one fourth layer of the layers related to the PUSCH.

The at least one first layer may be related to PUSCH antenna ports 1000 and 1004. The at least one second layer may be related to PUSCH antenna ports 1001 and 1005. The at least one third layer may be related to PUSCH antenna ports 1002 and 1006. The at least one fourth layer may be related to PUSCH antenna ports 1003 and 1007.

According to an embodiment, the one or more DMRS ports may be indicated based on the eight DMRS ports. In other words, one or more of the eight DMRS ports may be indicated based on the antenna port field.

In S440, the UE transmits the PUSCH to the BS.

The operations based on S410 to S440 described above may be implemented by the device of FIG. 6. For example, the UE 200 may control one or more transceivers 230 and/or one or more memories 240 to perform the operations based on S410 to S440.

Some steps may be omitted or added in the method. As one example, in the method, the operation based on S440 may be omitted.

Hereinafter, the embodiments described below will be specifically described in terms of the operation of the BS.

S510 to S540 described below correspond to S410 to S440 described in FIG. 4. By considering the correspondence relationship, redundant explanations are omitted. That is, a specific description of the BS operation described below may be replaced with the description/example of FIG. 4 corresponding to the operation. As one example, the description/embodiment of 4310 to S440 of FIG. 4 may be additionally applied to the BS operations of S510 to S540 described below.

FIG. 5 is a flowchart for describing a method performed by a BS according to another embodiment of the present disclosure.

Referring to FIG. 5, the method performed by the BS in the wireless communication system according to another embodiment of the present disclosure includes a DCI transmitting step (S510), a DMRS receiving step (S520), a PTRS receiving step (S530), and a PUSCH receiving step (S540).

In S510, the BS transmits downlink control information (DCI) for scheduling a physical uplink shared channel (PUSCH) to the UE. The DCI may include an antenna port field. One or more demodulation reference signal (DMRS) ports may be indicated based on the antenna port field.

In S520, the BS receives the DMRS based on the one or more DMRS ports from the UE.

In S530, the BS receives, from the UE, the PTRS based on at least one phase tracking reference signal (PTRS) port.

In S540, the BS receives the PUSCH from the UE.

The operations based on S510 to S540 described above may be implemented by the device of FIG. 6. For example, the BS 100 may control one or more transceivers 130 and/or one or more memories 140 to perform the operations based on S510 to S540.

Some steps may be omitted or added in the method. As one example, in the method, the operation based on S540 may be omitted.

A device to which an embodiment of the present disclosure is applicable (a device implementing the method/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment in a wireless communication system, the method comprising:

   receiving downlink control information (DCI) for scheduling a physical uplink shared channel (PUSCH), wherein the DCI includes an antenna port field, and one or more demodulation reference signal (DMRS) ports are indicated based on the antenna port field;
   transmitting a DMRS based on the one or more DMRS ports,
   transmitting a phase tracking reference signal (PTRS) based on at least one PTRS port; and
   transmitting the PUSCH,
   wherein a transmission scheme related to the PUSCH is configured as a codebook or a non-codebook,
   wherein a number of layers related to the PUSCH is larger than 4,
   wherein the DCI includes a PTRS-DMRS association field,
   wherein the PTRS-DMRS association field indicates an association between the one or more DMRS ports and the least one PTRS port, and
   wherein based on a maximum number of the at least one PTRS ports being 1:
   the PTRS-DMRS association field is based on a 3 bit value indicating one of eight DMRS ports.

2. The method of claim 1, wherein based on the maximum number of the at least one PTRS ports being 2: the PTRS-DMRS association field is based on a 4 bit value.

3. The method of claim 2, wherein a 2 bit value of the 4 bit value indicates one of four DMRS ports sharing a first PTRS port, and
   wherein a remaining 2 bit value of the 4 bit value indicates one of four DMRS ports sharing a second PTRS port.

4. The method of claim 3, wherein based on the transmission scheme related to the PUSCH being configured as the codebook:

   the first PTRS port is related to at least one first layer of the layers related to the PUSCH, and
   the second PTRS port is related to at least one second layer of the layers related to the PUSCH.

5. The method of claim 4, wherein the at least one first layer is related to PUSCH antenna ports 1000, 1002, 1004, and 1006, and
   wherein the at least one second layer is related to PUSCH antenna ports 1001, 1003, 1005, and 1007.

6. The method of claim 1, wherein based on the maximum number of the at least one PTRS ports being 4, the PTRS-DMRS association field is based on the 4 bit value.

7. The method of claim 2, wherein each bit value of the 4 bit value indicates one of two DMRS ports sharing each PTRS port among four PTRS ports.

8. The method of claim 7, wherein a first bit value of the 4 bit value indicates one of two DMRS ports sharing a first PTRS port,

   wherein a second bit value of the 4 bit value indicates one of two DMRS ports sharing a second PTRS port,
   wherein a third bit value of the 4 bit value indicates one of two DMRS ports sharing a third PTRS port, and
   wherein a fourth bit value of the 4 bit value indicates one of four DMRS ports sharing a fourth PTRS port.

9. The method of claim 8, wherein based on the transmission scheme related to the PUSCH being configured as the codebook:

the first PTRS port is related to at least one first layer of the layers related to the PUSCH,
the second PTRS port is related to at least one second layer of the layers related to the PUSCH,
the third PTRS port is related to at least one third layer of the layers related to the PUSCH, and
the fourth PTRS port is related to at least one fourth layer of the layers related to the PUSCH.

10. The method of claim 9, wherein the at least one first layer is related to PUSCH antenna ports 1000 and 1004,

wherein the at least one second layer is related to PUSCH antenna ports 1001 and 1005,
wherein the at least one third layer is related to PUSCH antenna ports 1002 and 1006, and
wherein the at least one fourth layer is related to PUSCH antenna ports 1003 and 1007.

11. The method of claim 1, wherein the one or more DMRS ports are indicated based on the eight DMRS ports.

12. A user equipment operating in a wireless communication system, comprising:

one or more transceivers;
one or more processors; and
one or more memories operably connectable to the one or more processors, and storing instructions of configuring the one or more processors to perform operations based on being executed by the one or more processors,
wherein the operations comprise:

receiving downlink control information (DCI) for scheduling a physical uplink shared channel (PUSCH), wherein the DCI includes an antenna port field, and one or more demodulation reference signal (DMRS) ports are indicated based on the antenna port field;
transmitting a DMRS based on the one or more DMRS ports;
transmitting a phase tracking reference signal (PTRS) based on at least one PTRS port; and
transmitting the PUSCH,
wherein a transmission scheme related to the PUSCH is configured as a codebook or a non-codebook,
wherein a number of layers related to the PUSCH is larger than 4,
wherein the DCI includes a PTRS-DMRS association field,
wherein the PTRS-DMRS association field indicates an association between the one or more DMRS ports and the least one PTRS port, and
wherein based on a maximum number of the at least one PTRS ports being 1:
the PTRS-DMRS association field is based on a 3 bit value indicating one of eight DMRS ports.

13. A device comprising: one or more memories and one or more processors functionally connected to the one or more memories,

wherein the one or more memories include instructions of configuring the one or more processors to perform operations based on being executed by the one or more processors, and
wherein the operations comprise:

receiving downlink control information (DCI) for scheduling a physical uplink shared channel (PUSCH), wherein the DCI includes an antenna port field, and one or more demodulation reference signal (DMRS) ports are indicated based on the antenna port field;
transmitting a DMRS based on the one or more DMRS ports;
transmitting a phase tracking reference signal (PTRS) based on at least one PTRS port; and
transmitting the PUSCH,
wherein a transmission scheme related to the PUSCH is configured as a codebook or a non-codebook,
wherein a number of layers related to the PUSCH is larger than 4,
wherein the DCI includes a PTRS-DMRS association field,
wherein the PTRS-DMRS association field indicates an association between the one or more DMRS ports and the least one PTRS port, and
wherein based on a maximum number of the at least one PTRS ports being 1:

the PTRS-DMRS association field is based on a 3 bit value indicating one of eight DMRS ports.

14. One or more non-transitory computer-readable media storing one or more instructions,

wherein the one or more instructions executable by one or more processors are configured to allow the one or more processors to perform operations, and
wherein the operations comprise:

receiving downlink control information (DCI) for scheduling a physical uplink shared channel (PUSCH), wherein the DCI includes an antenna port field, and one or more demodulation reference signal (DMRS) ports are indicated based on the antenna port field;
transmitting a DMRS based on the one or more DMRS ports;
transmitting a phase tracking reference signal (PTRS) based on at least one PTRS port; and
transmitting the PUSCH,
wherein a transmission scheme related to the PUSCH is configured as a codebook or a non-codebook,
wherein a number of layers related to the PUSCH is larger than 4,
wherein the DCI includes a PTRS-DMRS association field,
wherein the PTRS-DMRS association field indicates an association between the one or more DMRS ports and the least one PTRS port, and
wherein based on a maximum number of the at least one PTRS ports being 1:
the PTRS-DMRS association field is based on a 3 bit value indicating one of eight DMRS ports.

15. A method performed by a base station in a wireless communication system, the method comprising:

transmitting downlink control information (DCI) for scheduling a physical uplink shared channel (PUSCH), wherein the DCI includes an antenna port field, and one or more demodulation reference signal (DMRS) ports are indicated based on the antenna port field;
receiving a DMRS based on the one or more DMRS ports;
receiving a phase tracking reference signal (PTRS) based on at least one PTRS port; and
receiving the PUSCH,
wherein a transmission scheme related to the PUSCH is configured as a codebook or a non-codebook,
wherein a number of layers related to the PUSCH is larger than 4,
wherein the DCI includes a PTRS-DMRS association field,
wherein the PTRS-DMRS association field indicates an association between the one or more DMRS ports and the least one PTRS port, and
wherein based on a maximum number of the at least one PTRS ports being 1:
the PTRS-DMRS association field is based on a 3 bit value indicating one of eight DMRS ports.

16. A base station operating in a wireless communication system, comprising:

one or more transceivers;
one or more processors; and
one or more memories operably connectable to the one or more processors, and storing instructions of configuring the one or more processors to perform operations based on being executed by the one or more processors,
wherein the operations comprise:

transmitting downlink control information (DCI) for scheduling a physical uplink shared channel (PUSCH), wherein the DCI includes an antenna port field, and one or more demodulation reference signal (DMRS) ports are indicated based on the antenna port field;
receiving a DMRS based on the one or more DMRS ports,
receiving a phase tracking reference signal (PTRS) based on at least one PTRS port; and
receiving the PUSCH,
wherein a transmission scheme related to the PUSCH is configured as a codebook or a non-codebook,
wherein a number of layers related to the PUSCH is larger than 4,
wherein the DCI includes a PTRS-DMRS association field,
wherein the PTRS-DMRS association field indicates an association between the one or more DMRS ports and the least one PTRS port, and

wherein based on a maximum number of the at least one PTRS ports being 1:
the PTRS-DMRS association field is based on a 3 bit value indicating one of eight DMRS ports.

【FIG. 1】

UE                                                    BS

S110

DMRS configuration information

S120

Generate sequence for DMRS

S130

Map sequence to resource element

S140

Transmit DMRS

【FIG. 2】

UE                                                    BS

S210

PTRS configuration information

S220

Generate sequence for PTRS

S230

Map sequence to resource element

S240

Transmit PTRS

【FIG. 3】

UE                                                                    BS

S310

Uplink scheduling

S320

DCI for uplink scheduling (PDCCH)

S330

Uplink data (PUSCH)

【FIG. 4】

Start

Receive DCI ——— S410

Transmit DMRS ——— S420

Transmit PTRS ——— S430

Transmit PUSCH ——— S440

End

EP 4 572 212 A1

【FIG. 5】

【FIG. 6】

28

## INTERNATIONAL SEARCH REPORT

International application No.

**PCT/KR2023/011841**

### A. CLASSIFICATION OF SUBJECT MATTER

**H04L 5/00**(2006.01)i; **H04B 7/0413**(2017.01)i

According to International Patent Classification (IPC) or to both national classification and IPC

### B. FIELDS SEARCHED

Minimum documentation searched (classification system followed by classification symbols)

H04L 5/00(2006.01); H04L 1/08(2006.01); H04W 52/14(2009.01); H04W 56/00(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, DCI, DMRS 포트(DMRS port), DMRS, PTRS, 코드북(codebook), 레이어 (layer), PTRS-DMRS association field

### C. DOCUMENTS CONSIDERED TO BE RELEVANT

| Category* | Citation of document, with indication, where appropriate, of the relevant passages | Relevant to claim No. |
|---|---|---|
| A | US 2022-0239410 A1 (SAMSUNG ELECTRONICS CO., LTD.) 28 July 2022 (2022-07-28)<br>See paragraphs [0421]-[0437]; claims 1 and 10-12; and figure 17. | 1-16 |
| A | US 2020-0120610 A1 (GUANGDONG OPPO MOBILE TELECOMMUNICATIONS CORP., LTD.) 16 April 2020 (2020-04-16)<br>See claim 11. | 1-16 |
| A | WO 2022-025590 A1 (LG ELECTRONICS INC.) 03 February 2022 (2022-02-03)<br>See paragraphs [0212]-[0223]; and figure 8. | 1-16 |
| A | KR 10-2022-0097490 A (TELEFONAKTIEBOLAGET LM ERICSSON (PUBL)) 07 July 2022 (2022-07-07)<br>See paragraphs [0176]-[0177]; and figure 10. | 1-16 |
| A | US 2021-0075570 A1 (VIVO MOBILE COMMUNICATION CO., LTD.) 11 March 2021 (2021-03-11)<br>See paragraphs [0027]-[0096]; and figures 2-3. | 1-16 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 November 2023** | **07 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 572 212 A1

## INTERNATIONAL SEARCH REPORT
### Information on patent family members

International application No.

**PCT/KR2023/011841**

| Patent document cited in search report | | | Publication date (day/month/year) | Patent family member(s) | | | Publication date (day/month/year) |
|---|---|---|---|---|---|---|---|
| US | 2022-0239410 | A1 | 28 July 2022 | CN | 116803043 | A | 22 September 2023 |
| | | | | EP | 4260508 | A1 | 18 October 2023 |
| | | | | KR | 10-2022-0103569 | A | 22 July 2022 |
| | | | | WO | 2022-154539 | A1 | 21 July 2022 |
| US | 2020-0120610 | A1 | 16 April 2020 | AU | 2017-426219 | A1 | 05 December 2019 |
| | | | | BR | 112019026688 | A2 | 23 June 2020 |
| | | | | CA | 3063783 | A1 | 07 February 2019 |
| | | | | CN | 111133804 | A | 08 May 2020 |
| | | | | CN | 111935809 | A | 13 November 2020 |
| | | | | CN | 111935809 | B | 23 May 2023 |
| | | | | EP | 3614748 | A1 | 26 February 2020 |
| | | | | EP | 3614748 | A4 | 22 April 2020 |
| | | | | EP | 3614748 | B1 | 28 September 2022 |
| | | | | MX | 2019015051 | A | 13 February 2020 |
| | | | | RU | 2741628 | C1 | 28 January 2021 |
| | | | | SG | 11201910738 | A | 27 February 2020 |
| | | | | US | 10945215 | B2 | 09 March 2021 |
| | | | | US | 11490336 | B2 | 01 November 2022 |
| | | | | US | 2021-0153136 | A1 | 20 May 2021 |
| | | | | WO | 2019-024101 | A1 | 07 February 2019 |
| | | | | ZA | 202001207 | B | 25 August 2021 |
| WO | 2022-025590 | A1 | 03 February 2022 | KR | 10-2022-0142529 | A | 21 October 2022 |
| | | | | KR | 10-2570074 | B1 | 24 August 2023 |
| | | | | US | 2023-0232415 | A1 | 20 July 2023 |
| KR | 10-2022-0097490 | A | 07 July 2022 | CN | 114982177 | A | 30 August 2022 |
| | | | | EP | 4055755 | A1 | 14 September 2022 |
| | | | | US | 2022-0385427 | A1 | 01 December 2022 |
| | | | | WO | 2021-090180 | A1 | 14 May 2021 |
| US | 2021-0075570 | A1 | 11 March 2021 | CN | 110034904 | A | 19 July 2019 |
| | | | | CN | 110034904 | B | 04 January 2022 |
| | | | | US | 11362787 | B2 | 14 June 2022 |
| | | | | WO | 2019-137225 | A1 | 18 July 2019 |

Form PCT/ISA/210 (patent family annex) (July 2022)